# EUROPEAN PATENT APPLICATION

(11) **EP 2 793 129 A2**
(43) Date of publication of application: **22.10.2014**
(21) Application number: 14158695.8
(22) Date of filing: 11.03.2014
(51) Int. Cl.: G06F 11/07

(54) **Safety control apparatus, safety control method, and control program**

(30) Priority: 17.04.2013 JP 2013086494
(71) Applicant: TOYOTA JIDOSHA KABUSHIKI KAISHA, Toyota-shi, Aichi-ken, 471-8571 (JP)
(72) Inventor: Taira, Tetsuya, TOYOTA-SHI, AICHI-KEN, 471-8571 (JP); Bitoh, Hiroshi, TOYOTA-SHI, AICHI-KEN, 471-8571 (JP)
(74) Representative: Intès, Didier Gérard André

(57) **Abstract**

A safety control apparatus (1) includes: control means (4) that controls a control object (2); control monitoring means (5) that monitors the control means, and upon determination that the control means is abnormal, outputs an abnormal signal; delay means (6) that generates a delay signal and outputs the delay signal, the delay signal being obtained by delaying the abnormal signal output from the control monitoring means for a predetermined period of time; and stop means (7) that stops the control object according to the delay signal output from the delay means. The control monitoring means (5) may output the abnormal signal of pulse form to the delay means (6) upon determination that the control means (4) is abnormal, and the delay means may output the delay signal with pulse interval wider than that of the abnormal signal.

## Description

### BACKGROUND OF THE INVENTION

### 1. Field of the Invention

The present invention relates to a safety control apparatus, a safety control method, and a control program that monitor an abnormality of a controller.

### 2. Description of Related Art

A safety control apparatus that includes a monitoring unit is known. The monitoring unit monitors a controller such as a CPU that controls a control object and outputs, upon determination that the controller is abnormal, a reset signal to the controller (see, for example, Japanese Unexamined Patent Application Publication No. 2000-514221).

Incidentally, when an abnormality occurs in the controller and the controller itself is in an uncontrollable state, for example, the controller may not receive the reset signal from the monitoring unit. In such a case, the controller cannot normally output a control signal to the control object, and the control object may go out of control.

### SUMMARY OF THE INVENTION

The present invention has been made in order to solve such a problem, and mainly aims to provide a safety control apparatus, a safety control method, and a control program that are capable of securing the safety of the control object even when the controller is abnormal.

One exemplary aspect of the present invention to accomplish the aforementioned object is a safety control apparatus including: control means that controls a control object, control monitoring means that monitors the control means, and upon determination that the control means is abnormal, outputs an abnormal signal; delay means that generates a delay signal and outputs the delay signal, the delay signal being obtained by delaying the abnormal signal output from the control monitoring means for a predetermined period of time; and stop means that stops the control object according to the delay signal output from the delay means.

In this aspect, upon determination that the control means is abnormal, the control monitoring means may output the abnormal signal of pulse form to the delay means, and the delay means may output the delay signal with pulse interval wider than that of the abnormal signal.

In this aspect, the delay means may delay a rising edge from a low level to a high level of the abnormal signal of pulse form output from the monitoring means to output the delay signal with extended low-level time.

In this aspect, the safety control apparatus may further include drive means that drives the control means, and the stop means may be in an OFF state when the delay signal output from the delay means is in a high level and stop the control object by interrupting supply of a control signal from the control means to the drive means.

In this aspect, the delay means may output the delay signal with low-level time substantially doubled.

In this aspect, the safety control apparatus may further include diagnosis means that diagnoses whether or not the delay means normally functions.

In this aspect, the control object may be a motor that drives a wheel of an inverted two-wheel vehicle, the inverted two-wheel vehicle travelling while keeping an inverted state.

One exemplary aspect of the present invention to accomplish the aforementioned object may be a safety control method including: monitoring control means that controls a control object, and upon determination that the control means is abnormal, generating an abnormal signal; generating a delay signal obtained by delaying the abnormal signal that is generated for a predetermined period of time; and stopping the control object according to the delay signal that is generated.

One exemplary aspect of the present invention to accomplish the aforementioned object may be a control program that causes a computer to execute the following processing of: monitoring control means that controls a control object, and upon determination that the control means is abnormal, generating an abnormal signal; generating a delay signal obtained by delaying the abnormal signal that is generated for a predetermined period of time; and stopping the control object according to the delay signal that is generated.

According to the present invention, it is possible to provide a safety control apparatus, a safety control method, and a control program that are capable of securing the safety of the control object even when the controller is abnormal.

The above and other objects, features and advantages of the present invention will become more fully understood from the detailed description given hereinbelow and the accompanying drawings which are given by way of illustration only, and thus are not to be considered as limiting the present invention.

### BRIEF DESCRIPTION OF THE DRAWINGS

Fig 1 is a block diagram showing a schematic system configuration of a safety control apparatus according to a first exemplary embodiment of the present invention;
Fig. 2 is a circuit diagram showing one example of a circuit configuration of a power element;
Fig. 3 is a diagram showing an operation of a WD monitoring circuit when a CPU is normal;
Fig. 4 is a diagram showing an operation of the WD monitoring circuit when the CPU is abnormal;
Fig. 5 is a diagram for describing a delay signal generated by a delay circuit;
Fig. 6 is a flowchart showing a flow of a control method by the safety control apparatus according to the first exemplary embodiment of the present invention; and
Fig. 7 is a block diagram showing a schematic system configuration of a safety control apparatus according to a second exemplary embodiment of the present invention.

### DESCRIPTION OF THE EXEMPLARY EMBODIMENTS

### [First exemplary embodiment]

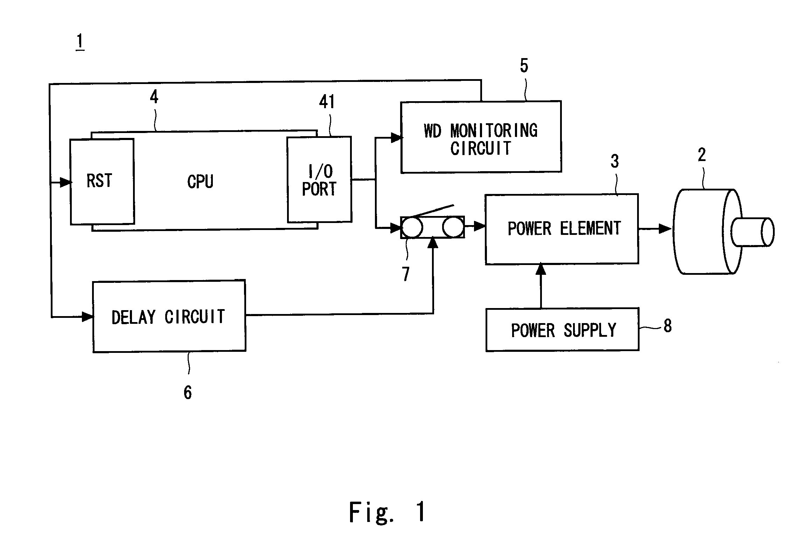

Hereinafter, with reference to the drawings, exemplary embodiments of the present invention will be described. Fig. 1 is a block diagram showing a schematic system configuration of a safety control apparatus according to a first exemplary embodiment of the present invention.

A safety control apparatus 1 according to the first exemplary embodiment includes a motor 2, a power element 3 that drives the motor 2, a CPU 4 that controls the motor 2, a WD monitoring circuit 5 that monitors the CPU 4, a delay circuit 6 that delays a signal from the WD monitoring circuit 5, and a power element interrupt circuit 7 that interrupts a control signal from the CPU 4 to the power element 3.

The safety control apparatus 1 includes, as principal hardware configurations, a microcomputer including, for example, the central processing unit (CPU) 4 that performs calculation processing, control processing and the like, and a memory such as a read only memory (ROM) or a random access memory (RAM) storing a calculation program, a control program and the like to be executed by the CPU 4. The CPU 4 and the memory are connected to each other via a data bus or the like.

The motor 2 is one specific example of a control object, and is provided, for example, in an inverted vehicle (e.g., inverted two-wheel vehicle) that travels while keeping an inverted state. The motor 2 drives a wheel of the inverted vehicle, or is provided in each joint of a robot to rotationally drive each joint.

The power element 3 is one specific example of drive means, and generates a drive current to drive the motor 2 using power supplied from a power supply 8 such as a battery according to a motor control signal output from the CPU 4. The power element 3 outputs the drive current that is generated to the motor 2. The motor 2 is rotationally driven by the drive current output from the power element 3.

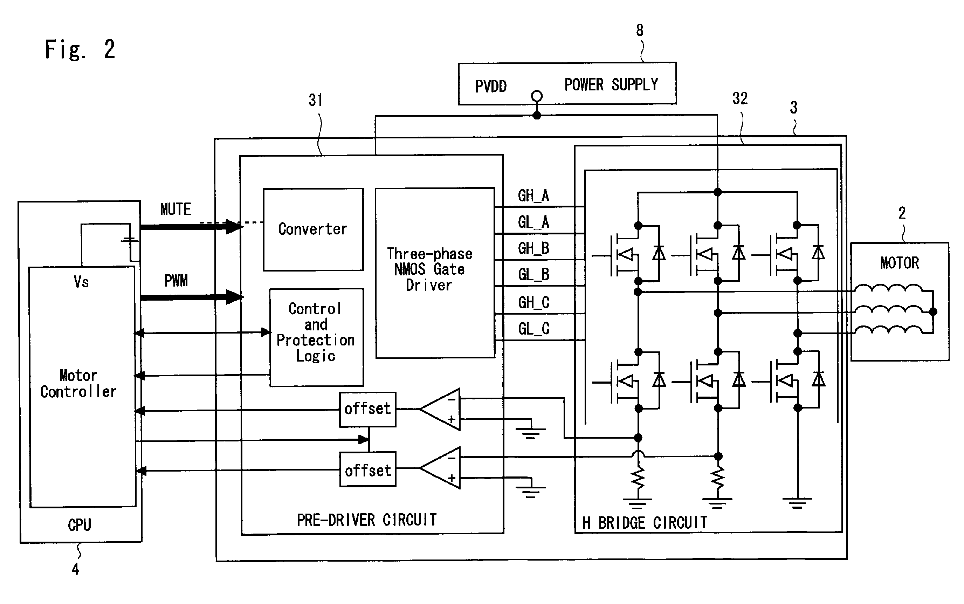

Fig. 2 is a circuit diagram showing one example of a circuit configuration of the power element. The power element 3 includes, for example, a pre-driver circuit 31 and an H bridge circuit 32. The pre-driver circuit 31 generates a drive signal to drive the H bridge circuit 32 based on the control signal output from the CPU 4 (e.g., a high-speed pulsed Pulse Width Modulation (PWM) signal that controls the motor 2) to output the drive signal to the H bridge circuit 32. The H bridge circuit 32 outputs a high-voltage drive current to the motor 2 according to the drive signal output from the pre-driver circuit 31.

The CPU 4 is one specific example of control means, and is connected to the motor 2 through the power element interrupt circuit 7 and the power element 3. The CPU 4 generates and outputs the motor control signal to control the motor 2.

The CPU 4 periodically outputs a pulsed WD signal to the WD monitoring circuit 5 through an I/O port 41 to execute self fault diagnosis, for example.

The Watch Dog (WD) monitoring circuit 5 is one specific example of control monitoring means, and monitors an abnormality of the CPU 4. The WD monitoring circuit 5 monitors the pulsed WD signal output from the CPU 4, and determines whether there is an abnormality in the CPU 4 based on the state of the WD signal. The WD monitoring circuit 5 determines that the CPU 4 has a fault when the state of the pulsed WD signal output from the CPU 4 is not proper (e.g., when the WD signal is fixed to a high level or a low level, or when a timing of switching the high level and the low level is irregular).

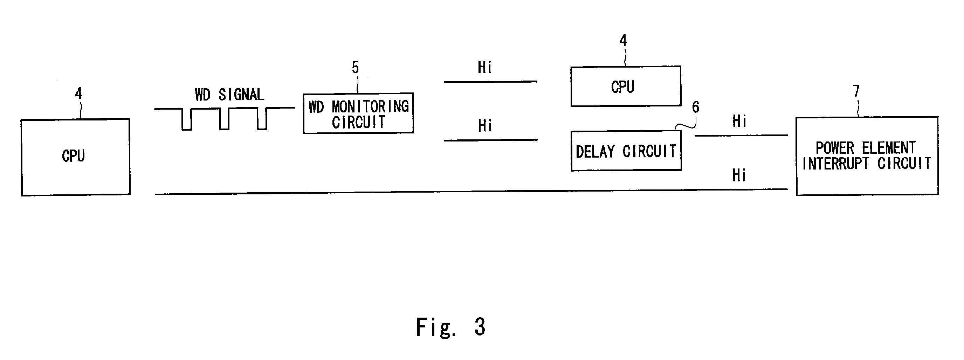

While the WD monitoring circuit 5 determines that the CPU 4 operates normally based on the WD signal periodically output from the CPU 4, for example, the WD monitoring circuit 5 outputs a signal fixed to the high level to the CPU 4 and the delay circuit 6 (Fig. 3).

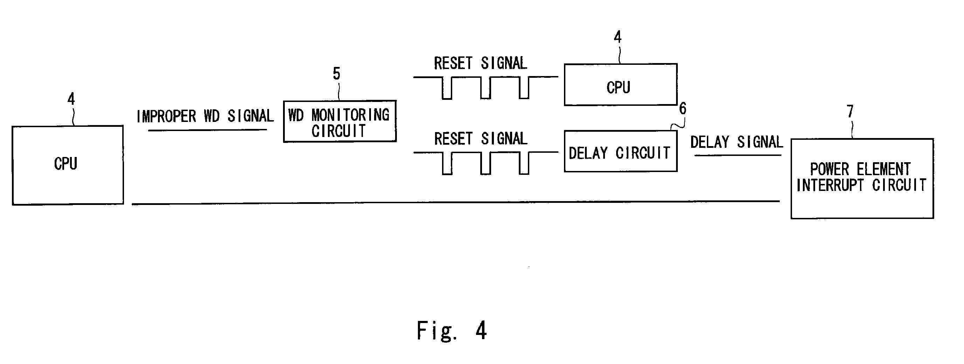

Meanwhile, upon determination that the CPU 4 is abnormal based on the WD signal periodically output from the CPU 4, the WD monitoring circuit 5 outputs a pulsed reset signal (one example of an abnormal signal) that repeats the high level and the low level at a predetermined cycle to the CPU 4 and the delay circuit 6 (Fig. 4). The WD monitoring circuit 5 generates the pulsed reset signal at a predetermined cycle (t) to output the pulsed reset signal to the CPU 4 and the delay circuit 6. Upon receiving the pulsed reset signal, the CPU 4 is forced to be in a reset state. In the reset state, the CPU 4 normally stops outputting the motor control signal to the power element 3. The motor is then stopped.

Incidentally, when an abnormality occurs in the CPU and the CPU is in an uncontrollable state (runaway state), for example, the CPU may not receive the reset signal from the WD monitoring unit. In such a case, the CPU cannot normally output the motor control signal to the motor, and the motor may go out of control.

Meanwhile, in the safety control apparatus 1 according to the first exemplary embodiment, the WD monitoring circuit 5 outputs the reset signal not only to the CPU 4 but also to the delay circuit 6, as stated above. Therefore, the delay circuit 6 and the power element interrupt circuit 7 interrupt the motor control signal from the CPU 4 to the power element 3 according to the reset signal from the WD monitoring circuit 5 to definitely stop the motor 2. Accordingly, it is possible to secure the safety of the motor 2 even when the CPU 4 is abnormal.

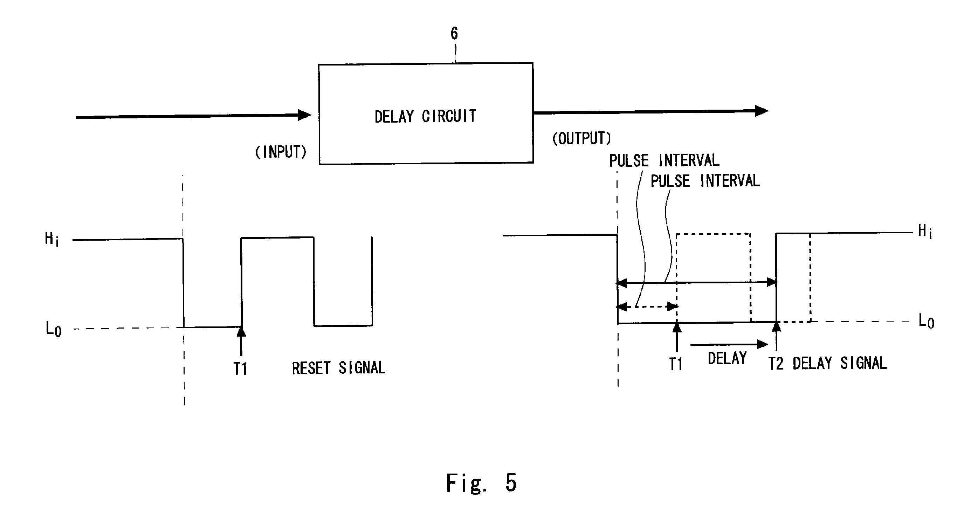

The delay circuit 6 is one specific example of delay means, and generates a delay signal with pulse interval wider than that of the reset signal output from the WD monitoring circuit 5. For example, the delay circuit 6 delays a rising edge T1 at which a low level is switched to a high level of the reset signal output from the WD monitoring circuit 5 to T2, generates a delay signal with pulse interval wider than that of the reset signal, and outputs the delay signal (Fig. 5). In other words, the delay circuit 6 delays the rising edge from the low level to the high level of the reset signal input from the WD monitoring circuit 5, generates a delay signal with extended low-level time to output the delay signal. The delay circuit 6 generates the delay signal with low-level time substantially twice as long as that of the reset signal.

Upon receiving a next pulse input (falling edge from a high level to a low level) while extending the low-level time, the delay circuit 6 further extends the low-level time. The delay circuit 6 outputs the delay signal that is generated to the power element interrupt circuit 7.

The power element interrupt circuit 7 is one specific example of stop means, and is provided between the CPU 4 and the power element 3. The power element interrupt circuit 7 includes a function of interrupting the motor control signal output from the CPU 4 to the power element 3 when an abnormality occurs in the CPU 4. The power element interrupt circuit 7 is formed of a relay circuit including a plurality of switches, for example.

The power element interrupt circuit 7 is in an OFF state when the delay signal output from the delay circuit 6 is in a high level. The power element interrupt circuit 7 interrupts supply of the motor control signal supplied from the CPU 4 to the power element 3 when being in the OFF state. The power element 3 thus stops supplying the drive current to the motor 2, whereby the motor 2 is able to reliably stop the rotational drive.

Meanwhile, the power element interrupt circuit 7 is in an ON state when the delay signal output from the delay circuit 6 is in a low level. In this case, the motor control signal is supplied from the CPU 4 to the power element 3. The power element 3 then outputs the drive current to the motor 2, and the motor 2 is rotationally driven. While the power element interrupt circuit 7 stops driving the motor 2 by interrupting the motor control signal supplied from the CPU 4 to the power element 3, it is not limited to this case. The power element interrupt circuit 7 may stop driving the motor 2 by interrupting the power supply from the power supply 8 to the power element 3, for example. The power element interrupt circuit 7 may further interrupt the motor control signal supplied from the CPU 4 to the power element 3, and at the same time, may interrupt the power supply from the power supply 8 to the power element 3.

When the power element interrupt circuit is driven using the pulsed reset signal output from the WD monitoring circuit as in the related art, the following problems may be raised due to its short pulse interval. That is, for example, since the low-level interval of the reset signal is short, the power element interrupt circuit is immediately in an OFF state, which abruptly stops the drive of the motor. This may result in overturning, for example, if the motor of the inverted vehicle abruptly stops. Furthermore, according to the related art, since the reset signal is immediately switched from a low level to a high level, such a problem may be caused in which the power interrupt circuit is in an ON state and the motor operates even when the CPU is in an uncontrollable state.

Meanwhile, in the safety control apparatus 1 according to the first exemplary embodiment, as stated above, the delay circuit 6 delays the rising edge at which the low level is switched to the high level of the reset signal output from the WD monitoring circuit 5 to generate the delay signal with pulse interval wider than that of the reset signal. This enables to increase the low-level interval of the reset signal, thereby being able to appropriately delay the time at which the power element interrupt circuit 7 is in an OFF state. Accordingly, when an abnormality occurs in the CPU 4, it is possible to stop the motor 2 with an appropriate delay with a more natural feeling without abruptly stopping the motor 2. Further, in the safety control apparatus 1 according to the first exemplary embodiment, the reset signal is switched from a low level to a high level with a sufficient interval. This helps to prevent such a situation that the power interrupt circuit is in an ON state and the motor 2 starts the operation even when the CPU 4 is in an uncontrollable state.

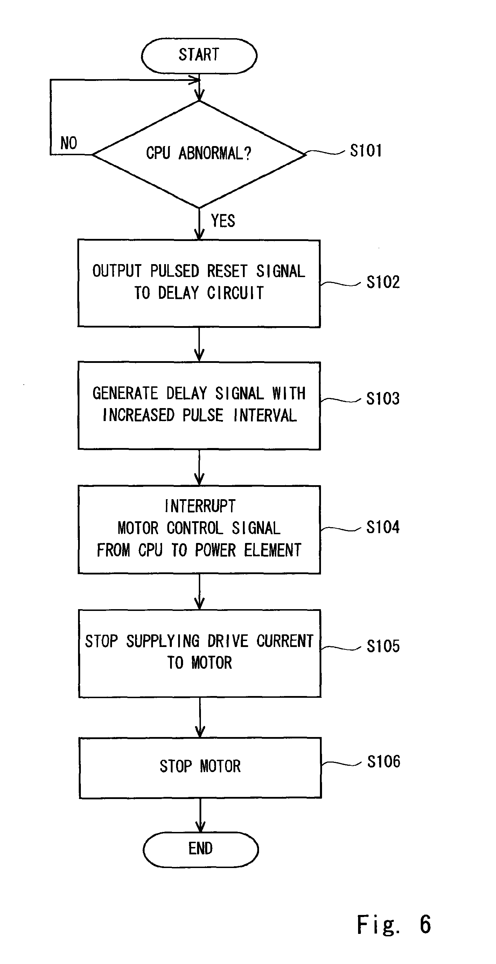

Fig. 6 is a flowchart showing a flow of a control method by the safety control apparatus according to the first exemplary embodiment.

Upon determination that the CPU 4 is abnormal based on the WD signal periodically output from the CPU 4 (YES in Step S101), the WD monitoring circuit 5 outputs the pulsed reset signal which repeats a high level and a low level at a predetermined cycle to the CPU 4 and the delay circuit 6 (Step S102).

The delay circuit 6 delays a rising edge at which a low level is switched to a high level of the reset signal input from the WD monitoring circuit 5, generates a delay signal with pulse interval wider than that of the reset signal (Step S103), and outputs the delay signal to the power element interrupt circuit 7.

The power element interrupt circuit 7 is in an OFF state when the delay signal output from the delay circuit 6 is in a high level, and interrupts supply of the motor control signal from the CPU 4 to the power element 3 (Step S104). The power element 3 stops supplying the drive current to the motor 2 (Step S 1 05), and the motor 2 stops the rotational drive (Step S106).

As stated above, in the safety control apparatus 1 according to the first exemplary embodiment, upon determination that the CPU 4 is abnormal, the WD monitoring circuit 5 outputs the reset signal to the CPU 4 and the delay circuit 6. Accordingly, the delay circuit 6 and the power element interrupt circuit 7 interrupt the motor control signal from the CPU 4 to the power element 3 according to the reset signal from the WD monitoring circuit 5 to definitely stop the motor 2. It is therefore possible to secure the safety of the motor 2 even when the CPU 4 is abnormal.

Furthermore, when an abnormality occurs in the CPU 4, the delay circuit 6 delays a rising edge from a low level to a high level of the reset signal input from the WD monitoring circuit 5, to generate a delay signal with extended low-level time. This enables to increase the low-level interval of the reset signal, thereby being able to properly delay the time at which the power element interrupt circuit 7 is in an OFF state. It is therefore possible to stop the motor 2 with an appropriate delay with a more natural feeling without abruptly stopping the motor 2 when an abnormality occurs in the CPU 4.

If the CPU 4 goes out of control when an unstable control object such as an inverted vehicle is controlled, it is impossible to predict an operation of the CPU 4, which is in particular a safety concern. Accordingly, as stated in the first exemplary embodiment, it is more important to reliably stop the motor 2 when the CPU 4 is abnormal, to secure the safety.

### [Second exemplary embodiment]

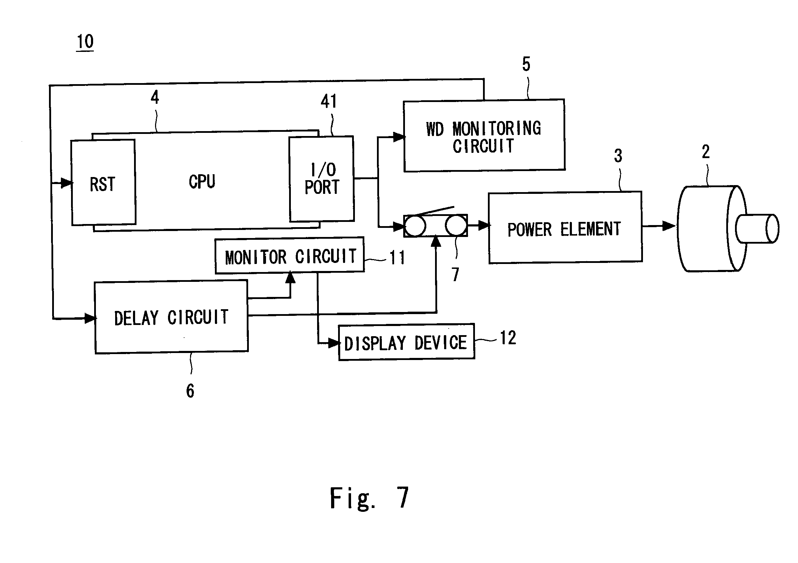

A safety control apparatus 10 according to a second exemplary embodiment of the present invention further includes a monitor circuit 11 that diagnoses the delay circuit 6 in addition to the configuration of the safety control apparatus 1 according to the first exemplary embodiment. Fig. 7 is a block diagram showing a schematic system configuration of the safety control apparatus according to the second exemplary embodiment.

The monitor circuit 11 is one specific example of diagnosis means, and is provided between the CPU 4 and the delay circuit 6. The monitor circuit 11 diagnoses whether the delay circuit 6 normally functions based on the signal output from the delay circuit 6 when the safety control apparatus 10 is started up. When the safety control apparatus 10 is started up, for example, the WD monitoring circuit 5 outputs the reset signal to the delay circuit 6. The delay circuit 6 delays a rising edge at which a low level is switched to a high level of the reset signal output from the WD monitoring circuit 5, generates a delay signal with pulse interval wider than that of the reset signal, and outputs the delay signal to the monitor circuit 11.

The monitor circuit 11 diagnoses whether or not the pulse of the delay signal output from the delay circuit 6 is appropriately delayed. Upon determination that the delay circuit 6 is abnormal as a result of the diagnosis, for example, the monitor circuit 11 may broadcast the abnormality diagnosis result to a user using a display device 12 or the like.

In this second exemplary embodiment, the other configurations are the same to those of the first exemplary embodiment. The same components are denoted by the same reference symbols, and the detailed description will be omitted.

As stated above, the safety control apparatus 10 according to the second exemplary embodiment diagnoses whether or not the delay circuit 6 functions properly, thereby being able to prevent an abnormality and the like of the delay circuit 11. It is therefore possible to reliably maintain the safety of the motor 2 even when the CPU 4 is abnormal.

Note that the present invention is not limited to the exemplary embodiments stated above, but may be changed as appropriate without departing from the spirit of the present invention.

Further, the present invention may achieve the processing shown in Fig. 6, for example, by causing a CPU to execute a computer program.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.).

Further, the program may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. A safety control apparatus (1) comprising:
control means (4) for controlling a control object (2);
control monitoring means (5) for monitoring the control means (4), and for outputting an abnormal signal upon determination that the control means (4) is abnormal;
delay means (6) for generating a delay signal and outputting the delay signal, the delay signal being obtained by delaying the abnormal signal output from the control monitoring means (5) for a predetermined period of time; and
stop means (7) for stopping the control object (2) according to the delay signal output from the delay means (6).

2. The safety control apparatus (1) according to Claim 1, wherein
upon determination that the control means (4) is abnormal, the control monitoring means (5) outputs the abnormal signal of pulse form to the delay means (6), and
the delay means (6) outputs the delay signal with pulse interval wider than that of the abnormal signal.

3. The safety control apparatus (1) according to Claim 2, wherein the delay means (6) delays a rising edge from a low level to a high level of the abnormal signal of pulse form output from the monitoring means (5) to output the delay signal with extended low-level time.

4. The safety control apparatus (1) according to Claim 3, further comprising drive means (3) for driving the control means (4),
wherein the stop means (7) is in an OFF state when the delay signal output from the delay means (6) is in a high level, and stops the control object (2) by interrupting supply of a control signal from the control means (4) to the drive means (3).

5. The safety control apparatus (1) according to Claim 3 or 4, wherein the delay means (6) outputs the delay signal with low-level time substantially doubled.

6. The safety control apparatus (1) according to any one of Claims 1 to 5, further comprising diagnosis means (11) for diagnosing whether or not the delay means (6) normally functions.

7. The safety control apparatus (1) according to any one of Claims 1 to 6, wherein the control object (2) is a motor that drives a wheel of an inverted two-wheel vehicle, the inverted two-wheel vehicle travelling while keeping an inverted state.

8. A safety control method comprising:
monitoring control means (4) that controls a control object (2), and upon determination that the control means (4) is abnormal, generating an abnormal signal;
generating a delay signal obtained by delaying the abnormal signal that is generated for a predetermined period of time (S103); and
stopping the control object (2) according to the delay signal that is generated.

9. A control program that causes a computer to execute the safety control method according to claim 8.
